# EUROPEAN PATENT APPLICATION

(11) **EP 0 909 618 A2**
(43) Date of publication of application: **21.04.1999**
(21) Application number: 98117528.4
(22) Date of filing: 16.09.1998
(51) Int. Cl.: B27N 1/00, D06B 3/02, D06M 10/00

(54) **Process and apparatus for the acetylation of lignocellulosic materials**

(30) Priority: 16.09.1997 GB 9719555; 28.11.1997 GB 9725083
(71) Applicant: SOUND PIPE LTD, Grand Turk, Turks and Caicos Islands (TC)
(72) Inventor: Chandler, Brian Burnett, 8933 St. Gallen (AT)
(74) Representative: Wood, Graham

(57) **Abstract**

The invention provides that fibres, especially in sliver form are acetylated by passing the sliver (20) through an atmosphere of acetic anhydride. The acetylation process involves applying energy to both the fibres and the acetylation atmosphere. The fibres are heated by a laser or infra red radiation source (28), and the atmosphere is heated by microwaves. The slivers are wound on supply and take up rolls (21,23) in inlet and outlet bulkheads (22,24), to prevent the acetic anhydride from escaping into the atmosphere.

## Description

This invention is concerned with the acetylation of lignocellulosic or natural fibres of all types including but not limited to jute, hemp, wood fibre, sisal, cotton, coir, wheat straw, hemp, tow, and flax, both seed and straw, and mixtures of same.

The invention has particular application where the fibres can take up a sliver form, such as the from for example in which hemp takes up as it leaves the carding engine. The slivers are usually rolled for transportation.

Acetylation of the fibres is a process which is effected where the propensity of the fibres to absorb water is undesirable and it is desired to minimise bio-degradation thereof.

Although this invention is concerned with a general acetylation process for the fibres, it is of particular use where the fibres especially in sliver form are to be incorporated into composites where the hydrophobic qualities of such fibres are desirable. Such composites may be used in the building and pipe lining industries.

For example, such composites can be used as cladding and roofing sheets for buildings or such composites can be used in pipe lining systems which are referred to as 'cured in place' lining systems wherein a tubular structure of resin impregnable material is impregnated with resin and is then placed in position on the pipeline or passageway surface. The resin is subsequently cured so that the tube becomes a hard lining pipe. A detailed description of the pipe lining technology is given in U.S. Patent No. 4009063 and in U.S. Patent No. 4064211.

However, the ultimate use of the treated fibres is not in essence to this invention.

It is already widely known that many naturally occurring fibrous materials such as wood, jute, hemp and the like may absorb water, and in many cases, may expand as water is absorbed. Furthermore, it is also known that acetylation of such materials may increase their resistance to water, and depending on the extent of the acetylation process, render them almost totally hydrophobic. Many methods of acetylation of have been proposed, though as a

result of research carried out by us, none, with the exception of the acetylation of cotton to produce rayon has been successfully commercialised, and it is believed that this failure to reach commercialisation has been due to the expense of setting up the necessary plant, and the difficulty of handling the acetylating agent, which is almost exclusively acetic anhydride-a volatile and toxic chemical.

Examples of proposed methods are described in European Patent No. 0213252, International Patent Application No. PCT/GB95/00371, European Patent Application No. 0650998, and International Patent Application No. PCT/SE93/00712. These specifications describe methods of acetylation wherein particular significance is attributed to the means of removal of the excess acetylating agent. For example, in European Patent No. 0213252, the material to be acetylated is placed into a basket which is immersed in an acetylating agent which impregnates the fibres, and the acetylating agent is then drained before other steps in the process are executed.

In International Application No. PCT/GB95/00371, after the fibres have been exposed to the acetylating agent under specified conditions, the fibres are then stripped of most of the remaining acetylating agent and other acetylation reaction products by a hot inert gas.

European Patent Application No. 0650998 discloses the use of a superheated chemical vapour to remove most of the excess acetylating agent and acetylation reaction products.

The acetylating agent common to all processes disclosed in the above patent specifications is acetic anhydride, which has a particularly acrid vapour and is also an expensive chemical, and thus there is a requirement for recovery of the chemical and post-acetylation treatment of the acetylated fibres to remove any acrid vapours therefrom.

Furthermore, the duration of the acetylation process is described above is lengthy. Although large batches of the fibres may be processed to increase the overall throughput of such processes, there is still a requirement that the fibres be brought into contact with an acetylating agent for a predetermined period of time and at certain conditions. Times may range from between an hour and ten hours, and if the acetylation conditions are particularly extreme, the duration of the process necessitates the construction of specialised acetylating vessels, which increases the cost of the process significantly.

It is an object of the present invention to provide a simple method and means for the acetylation and treatment of the fibres which will be cost effective, which will lend itself to economic production, and is quick compared to existing acetylation methods.

It is also a yet further object of the present invention to simplify the acetylation process and increase the efficiency of the process. The objectives are achieved in the invention in several aspects.

According to the present invention in a first aspect, there is provided a process for the acetylation of the fibres by putting them in a treatment chamber in which is contained an acetylation medium, and simultaneously subjecting the fibres to laser light and/or infra red radiation. The laser light if used, is preferably in the infra red spectrum. The laser light is used may be a CO2 laseer.

It has been found that laser light or infra red radiation heats the fibres effecting or enhancing the acetylation of the fibres.

If the appropriate amount of acetylation medium is used as set forth in our co-pending International Application No. PCT/GB/01858, then the requirement for additional process steps to remove or recover any residual acetylating agent is thus obviated. The content of said International Application is incorporated hereinto by reference, and any feature or aspect of that application which is usable in connection with the present invention is considered to be a feature of the present invention.

Where the fibres are in sliver form, it is preferred that they sliver or slivers are fed into, through and out of the treatment chamber as the laser light energy is being applied.

Preferably, the laser light or infra red radiation is diffused in order that the light will fall on a greater volume of the fibres, to ensure more effective acetylation.

Preferably, the fibres in sliver form are fed through the treatment chamber continuously by a suitable drive means comprising drive rolls which are arranged to feed the fibres but not to pull them apart and disintegrate the sliver form of same.

The treatment chamber may be transparent to the laser light or radiation so that the source can be located outside the chamber, and the light may be deflected by parabolic mirrors for the dispersion of same. Any number of laser beams or radiation sources and parabolic mirrors may be used.

The treatment chamber may be elongated, preferably cylindrical, and may have slots at the ends for the feeding in and feeding out of the fibres, and in a preferred form, there are bulkhead enclosures at the inlet end and outlet end, so that the fibres can be stored in these enclosures before and after treatment. The enclosures can be differentially pressurised whereby the treatment medium can be caused to flow from the inlet end to the outlet end as the fibres move through the chamber.

The treatment medium preferably is acetic anhydride which is supplied only in sufficient quantity to acetylate the fibres to the required degree, although this is not essential to the invention.

Surplus acetic anhydride could be tolerated, the surplus being collected and returned to the inlet end.

The laser light or infra red radiation has the effect of heating the fibres, which enhances the acetylation process, but as an additional measure, to accelerate the acetylation process, heating for example by microwave energy may also be applied to the fibres, for example in the same chamber containing the fibres or in a separate chamber. The microwave or other energy has the effect of heating the acetic anhydride, and the heating of both the fibres and the medium accelerates the acetylation process, and the treatment time can be reduced.

The chamber may suitably be a glass tube.

As many as six rolls of the fibres in sliver form may be passed through the chamber at the same time.

The acetic anhydride may be introduced at the inlet end, and at the outlet end acetic acid may be drawn off.

Prior to the treatment, it is preferable to first dry the fibres. Any suitable means may be used.

The invention also extends to an apparatus comprising the features for carrying out the method of the invention in its widest or any preferred form.

In a second aspect of the present invention, fibres in sliver form are acetylated by being fed continuously through an atmosphere of acetylating agent.

The atmosphere may be heated, preferably be microwave energy.

The sliver may be heated by laser light and/or infra red radiation.

The heating of the atmosphere and the sliver may be effected in sequence.

Preferably, the laser light and/or infra red radiation is applied to heat the fibres before they pass into the chamber where the heat is applied to the acetylating agent, which is preferably acetic anhidride.

Embodiments of the invention will now be described with reference to the accompanying drawings, wherein;-
Fig. 1 is a diagrammatic view of a treatment apparatus for carrying out the method according to one embodiment; and
Fig. 2 is a similar view showing a second embodiment.

Referring to the drawing, the apparatus shown comprises a clear glass chamber 10 which is of cylindrical form and is arranged with its axis horizontal. Its ends 12 and 14 form inlet and outlet ends respectively, and each end is closed by a stopper, the stoppers having slots 16, 18 therein to allow slivers of fibres 20 to be passed through the chamber 10. There may be as many of six slivers 20 passed through the chamber 10 at the same time.

At the inlet end 12, there is an inlet enclosure 22 in which there is a roll (or rolls) 21 carrying the slivers 20, from which they are unwound and at the outlet end there is an outlet enclosure 24 of similar form which also carries a roll (or rolls) 23 onto which the fibres (after treatment) are rewound. The enclosures are sealed to the chamber 10 so as to be capable of containing elevated pressures therein. As the slivers of fibres are not capable of withstanding high tensile forces the rolls are driven in such a manner to prevent the slivers from being pulled apart as they are fed through the chamber 10.

Surrounding the chamber 10 is a heater 26, which may be electric in nature or it may be a microwave heater, in order to keep the temperature of the inside of the chamber 10 elevated. There is a translucent window in the heater, which may simply be a gap, so that laser light from a laser source 28 may pass into the chamber 10. The beam 30 from the laser 28 initially travels parallel to the chamber axis, but then it strikes a parabolic mirror 32, by which the light is not only turned through 90°, but also it is diffused into a wide beam 34 to impinge widely on the fibres 20 as they travel through the chamber 10. The dispersing of the beam of the laser may be by driving the mirror 32 in an oscillatory manner by a motor 33, so that the beam scans the fibres 20 as opposed to being widened.

For the acetylation process, acetic anhydride is introduced into the chamber 10 at the inlet end 12 through an inlet 36. Inert gas is also introduced into the inlet enclosure 22 through inlet 38, and simultaneously, the pressure in the inlet enclosure 22 is maintained at a higher level than that in enclosure 24 so that with the feed of the fibres 20 through the chamber 10, there is also a flow of the acetic anhydride along the chamber 10 in the same direction.

The laser light heats up the fibres 20 and enhances the acetylation process, which also helped by the heating of the chamber interior by the heater 26.

The method and apparatus provide a means for the effective acetylation of fibres of the type set forth above.

The inert gas and acetic acid resulting from the process and collecting in the enclosure 24 are collected by being drawn off through outlets 40 and 42 and can be recycled if appropriate.

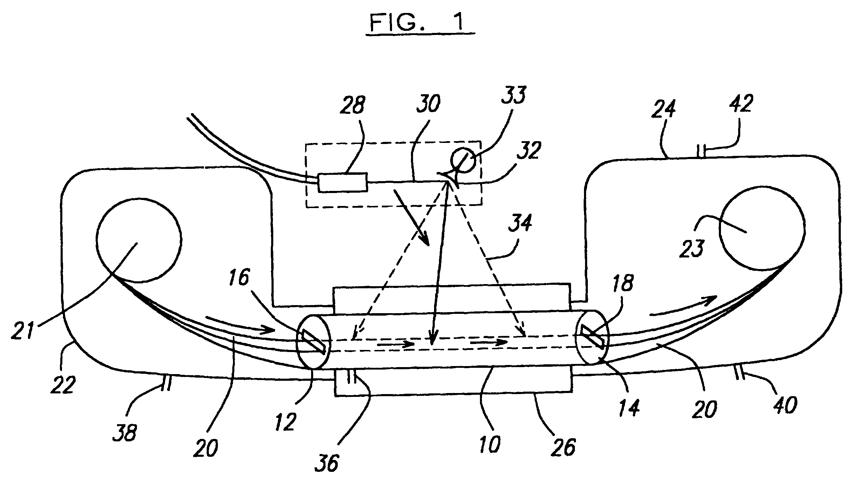

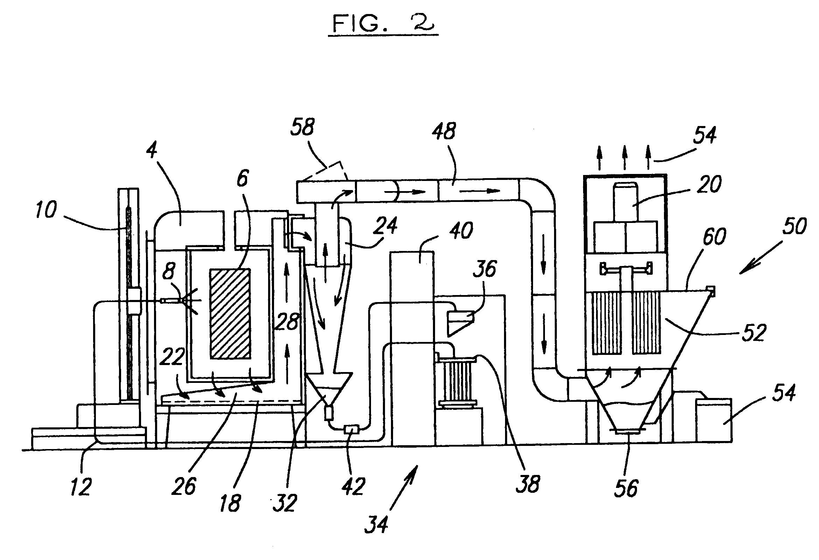

Referring now to Fig. 2 of the drawings wherein similar reference numerals have been used for similar parts shown in Fig. 1, the apparatus shown comprises a clear glass chamber 10 which is of cylindrical form and is arranged with its axis horizontal. Its ends 12 and 14 form inlet and outlet ends respectively, and each end is closed by a stopper, the stoppers having slots 16, 18 therein to allow slivers of fibres 20 to be passed through the chamber 10. The fibres are passed through the chamber continuously, but as in the first embodiment, continuous means that they may move continuously without stopping, or they may move step by step with a dwell time between steps, but the method is not a batch process. There may be as many of six slivers 20 passed through the chamber 10 at the same time.

At the inlet end 12, there is an inlet enclosure 22 in which there is a roll (or rolls) 21 carrying the slivers 20, from which they are unwound and at the outlet end of the apparatus there is an outlet enclosure 24 of similar form which also carries a roll (or rolls) 23 onto which the fibres (after treatment) are rewound. The enclosures are sealed so as to be capable of containing elevated pressures therein. As the slivers of fibres are not capable of withstanding high tensile forces the rolls are driven in such a manner to prevent the slivers from being pulled apart as they are fed through the chamber 10.

Surrounding the chamber 10 is a heater 26 (optional), which may be electric in nature, in order to keep the temperature of the inside of the chamber 10 elevated. There is a translucent window in the heater, which may simply be a gap, so that laser light from a laser source 28 may pass into the chamber 10. The beam 30 from the laser 28 initially travels parallel to the chamber axis, but then it strikes a parabolic mirror 32, by which the light is not only turned through 90°, but also it is diffused into a wide beam 34 to impinge widely on the fibres 20 as they travel through the chamber 10. The dispersing of the beam of the laser may be by driving the mirror 32 in an oscillatory manner by a motor 33, so that the beam scans the fibres 20 as opposed to being widened.

Between the chamber 10 and the enclosure 24, there is installed in a sealed manner, a microwave treatment chamber 4Y, through which the fibres 20 pass. In the centre of the micro wave chamber 4Y, there is a guide tube 6Y surrounded by the wave guide and micro wave energy sources 14Y, from which the microwave energy emerges in an inwards radial direction as shown by the arrows. The micro waves heat the acetic anhydride which is inserted into the tube 6Y at the inlet end as shown by 50Y, whereby the fibres 20 as they pass through the tube are acetylated.

For the acetylation process, acetic anhydride is introduced into the tube 6Y at the inlet end 50Y. Inert gas may also be introduced into the inlet enclosure 22 at inlet 38, and simultaneously, the pressure in the inlet enclosure 22 is maintained at a higher level than that in enclosure 24 so that with the feed of the fibres 20 through the chambers 10 and 6Y, there is also a flow of the acetic anhydride along the chambers 10 and 6Y in the same direction.

The laser light heats up the fibres 20 and enhances the acetylation process carried out by micro wave heating of the acetic anhydride

The method and apparatus of Fig.2 provide a means for the effective acetylation of fibres in sliver form.

The inert gas and acetic acid resulting from the process and collecting in the enclosure 24 are collected by being drawn off through outlets 40 and 42 and can be recycled if appropriate.

Again, it is preferred that only sufficient acetic anhydride be used for the required degree of acetylation.

The invention provides a number of aspects, including the acetylation of fibres using laser light and/or infra red radiation, the acetylation of fibres in sliver form wherein the slivers are passed through a treatment chamber, the combined heating, especially using micrwave energy, and laser or infra red radiation, for acetylation of fibres, and the sequential steps of heating the fibres in sliver form using laser and/or infra red, and heating of the acetylating medium, in the acetylation of the fibres of the sliver, and the invention also extends to any feature or features (method or apparatus) of any aspect in combination with any feature or features (method or apparatus) of any other aspect not identified by the application but which is shown to be novel and inventive in the future.

## Claims

1. A process for the acetylation of the fibres by putting them in a treatment chamber in which is contained an acetylation medium, and simultaneously subjecting the fibres to laser light and/or infra red radiation.

2. The process according to claim 1 wherein a laser light is used and is in the infra red spectrum.

3. The process according to claim 2, wherein the laser light is a CO2 laser.

4. The process according to any of claims 1 to 3, wherein the fibres are in sliver form, and they are fed into, through and out of the treatment chamber as the laser light and/or infra red energy is being applied.

5. The process according to any preceding claim wherein the laser light or infra red radiation is diffused in order that the light will fall on a greater volume of the fibres, to ensure more effective acetylation.

6. The process according to any preceding claim, wherein the fibres in sliver form are fed through the treatment chamber continuously by a suitable drive means comprising drive rolls which are arranged to feed the fibres but not to pull them apart and disintegrate the sliver form of same.

7. The process according to any preceding claim wherein the treatment chamber is transparent to the laser light or radiation, the source is located outside the chamber, and the light or radiation is deflected by parabolic mirrors for the dispersion of same.

8. The process according to any one of the preceding claims, wherein the treatment chamber is elongated.

9. The process according to claim 8, wherein the treatment chamber is cylindrical.

10. The process according to claim 8 or 9, wherein the treatment chamber has slots at the ends for the feeding in and feeding out of the fibres.

11. The process according to claim 8, 9 or 10, wherein the treatment chamber has bulkhead enclosures at the inlet end and outlet end, so that the fibres can be stored in these enclosures before and after treatment.

12. The process according to claim 11, wherein the enclosures are differentially pressurised whereby the treatment medium can be caused to flow from the inlet end to the outlet end as the fibres move through the chamber.

13. The process according to any one of the preceding claims, wherein the treatment medium is acetic anhydride.

14. The process according to claim 13, wherein the acetic anhidride is supplied only in sufficient quantity to acetylate the fibres to the required degree.

15. The process according to any preceding claim, wherein as an additional measure, to accelerate the acetylation process, heating is applied to the acetylating agent.

16. The process according to claim 15, wherein the heating is applied by microwave energy.

17. The process according to any one of the preceding claims wherein the chamber is a glass tube.

18. The process according to claim 17, wherein the acetlylation agent is introduced at the inlet end, and at the outlet end resulting products are drawn off.

19. The process according to any preceding claim, wherein prior to the treatment, the fibres are dried.

20. An apparatus arranged and constructed to carry out the method of any one of the preceding claims.

21. A process for the acetylation of fibres, wherein fibres in sliver form are acetylated by being fed continuously through a chamber containing an atmosphere of acetylating agent.

22. The process according to claim 21, wherein the atmosphere is heated, preferably be microwave energy.

23. The process according to claim 22, wherein the sliver is heated by laser light and/or infra red radiation.

24. The process according to claim 22 or 23, wherein the heating of the atmosphere and the sliver is effected in sequence.

25. A process according to claim 22, 23 or 24, wherein the laser light and/or infra red radiation is applied to heat the fibres before they pass into the chamber where the heat is applied to the acetylating agent.

26. The process according to any of claims 22 to 25, wherein the acetlyation agent is acetic anhidride.

27. The process comprising any feature of any of claims 1 to 21 in combination with any feature of any of claims 22 to 26.
